# EUROPÄISCHE PATENTSCHRIFT

(11) **EP 3 668 670 B1**
(45) Veröffentlichungstag und Bekanntmachung des Hinweises auf die Patenterteilung: **30.09.2026**
(21) Anmeldenummer: 18752763.5
(22) Anmeldetag: 10.08.2018
(51) Int. Cl.: B23B 31/107

(54) **SPANNFUTTER**
CHUCK
MANDRIN DE SERRAGE

(30) Priorität: 14.08.2017 DE 102017214155
(43) Veröffentlichungstag der Anmeldung: 24.06.2020
(73) Patentinhaber: MAPAL Dr. Kress SE & Co. KG, 73431 Aalen (DE)
(72) Erfinder: KRESS, Jochen, 73430 Aalen (DE)
(74) Vertreter: Kordel, Mattias
(86) Internationale Anmeldenummer: PCT/EP2018/071782
(87) Internationale Veröffentlichungsnummer: WO 2019/034561

(56) Entgegenhaltungen:
- CA-A- 679 878
- GB-A- 949 865
- JP-U- S5 094 577
- US-A- 2 167 014
- US-A- 6 142 485
- US-A1- 2004 253 070
- US-A1- 2015 202 689
- US-A1- 2016 236 282

## Beschreibung

Die Erfindung betrifft ein Spannfutter zum Einspannen von Zerspanungswerkzeugen gemäß dem Oberbegriff des Anspruchs 1. Ein solches Spannfutter ist aus dem Dokument GB 949 865 A bekannt.

Andere Spannfutter sind aus den Dokumenten JP S50 94577 U, US 2004/253070 A1, US 2015/202689 A1, US 6 142 485 A, US 2 167 014 A und US 2016/236282 A1 bekannt.

Ein Spannfutter gemäß dem Oberbegriff des Anspruchs 1 weist eine sich entlang einer Mittelachse des Spannfutters erstreckende Werkzeugaufnahme - insbesondere in Form einer Ausnehmung - zum Aufnehmen eines einzuspannenden Werkzeugschafts auf. Außerdem weist es wenigstens eine Spannbohrung auf, die eine Spannfutterwandung quer zu der Mittelachse durchsetzt, wobei die Spannfutterwandung die Werkzeugaufnahme umgreift. Die wenigstens eine Spannbohrung weist zumindest abschnittsweise ein Innengewinde auf. In der wenigstens einen Spannbohrung ist eine Spannschraube angeordnet, die ein erstes Gewinde aufweist, das mit dem Innengewinde der Spannbohrung kämmt.

Über die Spannschraube erfolgt nahezu der gesamte Kraftfluss der bei spanender Bearbeitung von Werkstücken mit in dem Spannfutter eingespanntem Zerspanungswerkzeug auftretenden axialen Kräfte und/oder Drehmomente. Das Zerspanungswerkzeug wird umso stabiler fixiert und gehalten, je größer die Spannkräfte sind, die von der Spannschraube aufgebracht werden. Insbesondere bei Verwendung einer zylinderförmigen Spannschraube, beispielsweise einer Madenschraube, hängt die Spannkraft von deren Anzugsdrehmoment ab. Wird dieses durch einen Bediener manuell, beispielsweise mittels eines Mehrkantschlüssels, in die Spannschraube eingeleitet, ist das Anzugsdrehmoment direkt abhängig von der Kraft des Bedieners. Insbesondere bei größeren Schaftdurchmessern der zu spanenden Zerspanungswerkzeuge und/oder bei Anwendungen, insbesondere Fräsanwendungen, bei denen hohe Zerspanungskräfte auftreten, beispielsweise bei der Schruppbearbeitung, reicht die aufgebrachte Spannkraft gegebenenfalls nicht aus, um das Zerspanungswerkzeug sicher und genau positioniert zu halten, woraus mangelnde Prozesssicherheit resultiert. Dabei ist eine Fixierung des Zerspanungswerkzeugs sowohl in radialer Richtung, also senkrecht zur Mittelachse, und gegen Verkippen, als auch in axialer Richtung wichtig, um eine hochgenaue Bearbeitung gewährleisten zu können.

Der Erfindung liegt die Aufgabe zugrunde, ein Spannfutter zum Einspannen von Zerspanungswerkzeugen zu schaffen, bei dem die genannten Nachteile nicht auftreten.

Die Aufgabe wird gelöst, indem der Gegenstand des Anspruchs 1 geschaffen wird. Vorteilhafte Ausgestaltungen ergeben sich aus den Unteransprüchen.

Die Aufgabe wird insbesondere gelöst, indem ein Spannfutter der hier angesprochenen Art geschaffen wird, dessen Spannschraube ein Differenzgewinde aufweist, wobei sich das erste Gewinde über einen ersten Längsabschnitt der Spannschraube erstreckt, und wobei die Spannschraube in einem zweiten Längsabschnitt ein zweites Gewinde aufweist. Das erste Gewinde in dem ersten Längsabschnitt weist eine erste Gewindesteigung auf. Das zweite Gewinde in dem zweiten Längsabschnitt weist eine zweite Gewindesteigung auf, die von der ersten Gewindesteigung des ersten Gewindes verschieden ist. Die Spannschraube wirkt über das zweite Gewinde mit einem Druckstück zusammen, das in der Spannbohrung verlagerbar geführt ist. Indem die Spannschraube mit dem Differenzgewinde einerseits mit dem Innengewinde der Spannbohrung kämmt und andererseits mit dem Druckstück zusammenwirkt, wobei sie nämlich mit dem ersten Gewinde mit dem Innengewinde der Spannbohrung kämmt und über das zweite Gewinde mit dem Druckstück zusammenwirkt, wobei das erste Gewinde und das zweite Gewinde verschiedene Gewindesteigungen aufweisen, kann eine Übersetzung und/oder Verstärkung des in die Spannschraube eingeleiteten Drehmoments in dem Sinne erfolgen, dass bei gegebenem eingeleiteten Drehmoment die durch die Schraube ausgeübten, entlang ihrer Längsachse wirkenden Spannkräfte größer sind, als bei einer einfachen, zylindrischen Spannschraube mit konstanter Gewindesteigung. Dabei ergibt sich eine effektive Gewindesteigung des Differenzgewindes insbesondere als Differenz der Gewindesteigungen des ersten Gewindes und des zweiten Gewindes und ist somit insbesondere kleiner als die Gewindesteigung desjenigen Gewindes, ausgewählt aus dem ersten Gewinde und dem zweiten Gewinde, welches die größere Gewindesteigung aufweist. Mithilfe der Spannschraube, die ein Differenzgewinde aufweist, können also höhere Spannkräfte bei gleichem Anzugsdrehmoment erzielt werden, sodass zum einen eine ausreichend hohe Spannkraft für eine Vielzahl von Anwendungen, insbesondere auch für größere Schaftdurchmesser sowie hohe Zerspanungskräfte, gewährleistet werden kann, wobei zum anderen die aufgebrachte Spannkraft nicht mehr in gleichem Maße wie bei einer Spannschraube mit konstanter Gewindesteigung von der Kraft des Anwenders oder Bedieners abhängt. Vorzugsweise kann für alle möglichen Zerspanungsanwendungen eine ausreichende Spannkraft erzeugt werden, selbst wenn diese manuell durch Einleiten eines Drehmoments in die Spannschraube aufgebracht wird. Somit kann ein Zerspanungswerkzeug sicher und positionsgenau in dem Spannfutter fixiert werden, sodass die Prozesssicherheit erhöht und genaue Bearbeitungsergebnisse gewährleistet sind.

Die wenigstens eine Spannbohrung durchsetzt die Spannfutterwandung bevorzugt senkrecht zu der Mittelachse, sodass insbesondere eine Längsachse der Spannbohrung senkrecht auf der Mittelachse steht, mithin in radiale Richtung weist. Auf diese Weise können besonders hohe Spannkräfte in den Schaft eines Zerspanungswerkzeugs eingeleitet werden.

Hier und im Folgenden wird unter einer axialen Richtung insbesondere eine Richtung verstanden, die sich in Längsrichtung der Mittelachse erstreckt. Eine radiale Richtung ist eine Richtung, die senkrecht auf der Mittelachse steht. Eine Umfangsrichtung umgreift die Mittelachse konzentrisch. Wie ausgeführt, weist die Spannbohrung eine Längsachse auf, entlang derer sie sich erstreckt. Diese Längsachse ist quer, vorzugsweise senkrecht zu der Mittelachse orientiert. Entsprechend weist auch die Spannschraube eine Längsachse auf, entlang derer sie sich erstreckt, und entlang derer insbesondere das erste Gewinde und das zweite Gewinde versetzt zueinander angeordnet sind. Diese Längsachse der Spannschraube fluchtet mit der Längsachse der Spannbohrung, wenn die Spannschraube in der Spannbohrung angeordnet ist.

Die Spannbohrung ist vorzugsweise rotationssymmetrisch, insbesondere zumindest abschnittsweise kreiszylindrisch, das heißt insbesondere im Querschnitt gesehen kreisförmig, ausgebildet.

Unter einem Differenzgewinde wird eine Gewindeanordnung verstanden, welche wenigstens zwei Gewinde aufweist, hier das erste Gewinde und das zweite Gewinde, wobei die wenigstens zwei Gewinde eine gleiche Gangrichtung, jedoch voneinander verschiedene Gewindesteigungen aufweisen.

Das erste Gewinde und das zweite Gewinde sind bevorzugt als Rechtsgewinde ausgebildet. Es ist aber auch möglich, dass das erste Gewinde und das zweite Gewinde als Linksgewinde ausgebildet sind.

Das erste Gewinde ist vorzugsweise ein Außengewinde, welches mit dem Innengewinde der Spannbohrung kämmt. Das zweite Gewinde ist vorzugsweise ein Außengewinde, welches in ein entsprechend ausgebildetes Innengewinde des Druckstücks eingreift, und mit dem Innengewinde des Druckstücks kämmt. Das Druckstück weist vorzugsweise eine zentrale Bohrung auf, welche ihrerseits das Innengewinde aufweist.

Das Druckstück ist vorzugsweise zumindest abschnittsweise rotationssymmetrisch, insbesondere kreiszylindrisch, das heißt insbesondere im Querschnitt gesehen kreisförmig, ausgebildet. Es ist aber auch möglich, dass das Druckstück zumindest einseitig eine Abflachung aufweist, sodass es von der reinen Kreiszylinderform und/oder Rotationssymmetrie abweicht. Besonders bevorzugt ist das Druckstück ringförmig ausgebildet, wobei es insbesondere die zentrale Bohrung mit dem Innengewinde umgreift.

Der zweite Längsabschnitt der Spannschraube sowie das Druckstück sind bevorzugt der Werkzeugaufnahme und damit der Mittelachse zugewandt angeordnet, wobei der erste Längsabschnitt der Spannschraube der Werkzeugaufnahme und damit der Mittelachse abgewandt angeordnet ist. Der erste Längsabschnitt ist dabei insbesondere einem äußeren Umfang des Spannfutters zugewandt, während der zweite Längsabschnitt und das Druckstück einem inneren Umfang des Spannfutters zugewandt sind. Auf diese Weise kann das Druckstück auf einen in der Werkzeugaufnahme angeordneten Werkzeugschaft eines Zerspanungswerkzeugs wirken und diesen sicher und stabil in der Werkzeugaufnahme fixieren.

Das Druckstück ist insbesondere eingerichtet und/oder angeordnet, um radiale Spannkräfte - senkrecht zur Mittelachse - in den Schaft eines Zerspanungswerkzeugs einzuleiten. Das Druckstück wirkt also insbesondere radial - senkrecht zur Mittelachse - auf den Werkzeugschaft.

Ein besonderer Vorteil des hier vorgeschlagenen Spannfutters ergibt sich auch daraus, dass die Spannschraube nicht direkt, sondern vielmehr über das Druckstück auf einen zu spannenden Werkzeugschaft wirkt, wobei das Druckstück geometrisch auf den zu spannenden Werkzeugschaft angepasst sein kann, um so besonders hohe Spannkräfte in diesen einzuleiten und eine besonders positionsgenaue Fixierung des Werkzeugschafts zu ermöglichen.

Erfindungsgemäß ist die erste Gewindesteigung größer als die zweite Gewindesteigung. Insbesondere auf diese Weise ergibt sich eine Verstärkung des durch einen Bediener in das erste Gewinde eingeleiteten Drehmoments im Bereich des zweiten Gewindes und des Druckstücks, wobei bei gleichem durch den Bediener aufgebrachten Drehmoment eine größere, in Längsrichtung der Spannschraube wirkende Spannkraft erzielt werden kann. Dies ergibt sich daraus, dass zur Verlagerung des Druckstücks in Richtung der Längsachse der Spannbohrung um eine bestimmte Strecke bei dieser Ausgestaltung der Gewindesteigungen eine größere Anzahl von Umdrehungen der Spannschraube nötig ist, als wenn diese eine konstante Gewindesteigung aufweisen würde, wobei dies insbesondere auch im Vergleich zu einer Spannschraube ohne Druckstück gilt, wo dann die Verlagerung eines dem zu spannenden Werkzeugschaft zugewandten, distalen Endes der Spannschraube betrachtet wird. Mit Blick auf die axiale Verlagerung dieses distalen Endes beziehungsweise des Druckstücks erfolgt also eine Untersetzung der durch den Bediener durchgeführten Schraubbewegung. Bei gleichem eingeleiteten Drehmoment kann eine erhöhte axiale Spannkraft aufgebracht werden; andererseits kann eine bestimmte axiale Spannkraft mit geringerem Drehmoment aufgebracht werden.

Bevorzugt ist vorgesehen, dass die erste Gewindesteigung doppelt so groß ist wie die zweite Gewindesteigung. Dies führt zu einer besonders vorteilhaften Verstärkung der axialen Spannkraft bei vorgegebenem eingeleiteten Drehmoment.

Besonders bevorzugt ist vorgesehen, dass die erste Gewindesteigung 1 mm beträgt, wobei die zweite Gewindesteigung 0,5 mm beträgt. Es hat sich gezeigt, dass gerade diese Werte geeignet sind, um eine vorteilhaft erhöhte axiale Spannkraft bei gegebenem, in die Spannschraube eingeleiteten Drehmoment zu erzeugen. Die effektive Gewindesteigung der Spannschraube ergibt sich als Differenz der ersten Gewindesteigung und der zweiten Gewindesteigung, sodass sie 0,5 mm beträgt. Durch diese Gestaltung wird quasi, wie bei einem Feingewinde, erreicht, dass bei gleichem eingeleiteten Drehmoment die resultierende Spannkraft ansteigt.

Wird die Spannschraube tiefer in Richtung auf die Mittelachse hin in die Spannbohrung eingeschraubt, wird - aufgrund der gleichen Gangrichtung des ersten Gewindes und des zweiten Gewindes - zugleich das Druckstück auf die Spannschraube aufgeschraubt und somit relativ zu der Spannschraube in Richtung von deren Längsachse gesehen entgegen der Einschraubrichtung der Spannschraube zurückverlagert. Da aber die Gewindesteigungen des ersten Gewindes und des zweiten Gewindes verschieden sind, wobei insbesondere die Gewindesteigung des ersten Gewindes größer ist als die Gewindesteigung des zweiten Gewindes, erfolgt diese Zurückverlagerung des Druckstücks relativ zu der Spannschraube mit geringerer Rate als die radiale Einwärtsbewegung der Spannschraube in Richtung auf die Mittelachse. Im Ergebnis wird somit das Druckstück gemeinsam mit der Spannschraube in radialer Richtung auf die Mittelachse zu verlagert, allerdings mit im Vergleich zu der Spannschraube reduzierter Rate oder Geschwindigkeit. Hieraus resultiert letztlich die Erhöhung der Spannkraft bei gegebenem Drehmoment.

Gemäß einer Weiterbildung der Erfindung ist vorgesehen, dass die Spannschraube in dem ersten Längsabschnitt einen ersten Nenndurchmesser aufweist, wobei sie in dem zweiten Längsabschnitt einen zweiten Nenndurchmesser aufweist, wobei der zweite Nenndurchmesser von dem ersten Nenndurchmesser verschieden ist. Dies ermöglicht eine kompakte Anordnung der Spanneinheit aus der Spannschraube einerseits und dem Druckstück andererseits. Besonders bevorzugt ist der erste Nenndurchmesser größer als der zweite Nenndurchmesser. Insbesondere dies ermöglicht eine besonders kompakte Anordnung des Druckstücks auf der Spannschraube, indem diese mit dem größeren Nenndurchmesser in das Innengewinde der Spannbohrung eingreift, wobei sie mit dem kleineren Nenndurchmesser in der zentralen Bohrung des Druckstücks angeordnet ist. Insbesondere kann dabei der Außendurchmesser des Druckstücks kleiner oder gleich dem ersten Nenndurchmesser gewählt werden.

Alternativ oder zusätzlich ist bevorzugt vorgesehen, dass die Spannbohrung einen entlang ihrer Länge konstanten lichten Innendurchmesser aufweist. Auch dies ermöglicht eine besonders kompakte und einfache Anordnung der Spanneinheit aus der Spannschraube und dem Druckstück in der Spannbohrung sowie eine einfache und kostengünstige Fertigung der Spannbohrung selbst. Insbesondere kann diese als homogene, durchgehende Bohrung mit konstantem Innendurchmesser gefertigt werden, wobei anschließend das Innengewinde zumindest abschnittsweise, insbesondere in einen ersten Spannbohrungslängsabschnitt der Spannbohrung, in dem bestimmungsgemäß der erste Längsabschnitt der Spannschraube angeordnet ist, geschnitten wird. Die Spannbohrung kann aber auch ein durchgehendes Innengewinde aufweisen, sodass sie das Innengewinde überall entlang ihrer Länge aufweist. Weist die Spannbohrung einen entlang ihrer Länge konstanten lichten Innendurchmesser auf, sind die Spannschraube und das Druckstück bevorzugt so ausgebildet, dass der Außendurchmesser des Druckstücks dem ersten Nenndurchmesser der Spannschraube entspricht, wodurch das Druckstück sicher und stabil in der Spannbohrung geführt ist.

Alternativ oder zusätzlich ist bevorzugt vorgesehen, dass die Spannbohrung das Innengewinde in einem ersten Spannbohrungslängsabschnitt aufweist, wobei der erste Längsabschnitt der Spannschraube in dem ersten Spannbohrungslängsabschnitt aufgenommen ist. Die Spannbohrung ist dann bevorzugt in einem zweiten Spannbohrungslängsabschnitt gewindefrei, wobei das Druckstück in dem zweiten Spannbohrungslängsabschnitt verlagerbar geführt ist. Dies ermöglicht eine besonders sichere und genaue Führung des Druckstücks in der Spannbohrung, insbesondere in dem zweiten Spannbohrungslängsabschnitt, wobei so insbesondere eine höhere Flächenanlage einer äußeren Umfangsfläche des Druckstücks an einer inneren Umfangsfläche der Spannbohrung bereitgestellt werden kann, als wenn das Druckstück an einem Innengewinde anliegt und durch dieses geführt wird. Auch werden so anderenfalls im Bereich von Gewindegängen vorhandene Kanten vermieden, sodass die Reibung zwischen dem Druckstück und der Spannbohrung reduziert ist.

Das Druckstück ist an seinem äußeren Umfang, insbesondere an einer äußeren Umfangsfläche, gewindefrei. Es weist also kein Außengewinde auf. Der erste Spannbohrungslängsabschnitt der Spannbohrung ist insbesondere der Werkzeugaufnahme und damit der Mittelachse des Spannfutters abgewandt, wobei der zweite Spannbohrungslängsabschnitt der Werkzeugaufnahme und damit der Mittelachse zugewandt ist.

Gemäß einer Weiterbildung der Erfindung ist vorgesehen, dass das Spannfutter eine Drehsicherung aufweist, durch welche das Druckstück gegen eine Verdrehung um die Längsachse der Spannbohrung gesichert ist. Dies ermöglicht insbesondere dann eine besonders genaue und stabile Einspannung eines Werkzeugschafts, wenn das Druckstück geometrisch auf den Werkzeugschaft abgestimmt ist. Es kann dann vermieden werden, dass diese geometrische Abstimmung durch eine ungewollte Verdrehung des Druckstücks um die Längsachse der Spannbohrung gestört oder aufgehoben wird. Vielmehr kann eine korrekte Ausrichtung des Druckstücks relativ zu dem Werkzeugschaft mithilfe der Verdrehsicherung gewährleistet werden.

Die Verdrehsicherung weist vorzugsweise wenigstens einen Vorsprung der Spannbohrung und/oder des Druckstücks auf, wobei der wenigstens eine Vorsprung in wenigstens eine Ausnehmung des jeweils anderen Teils, nämlich des Druckstücks und/oder der Spannbohrung, eingreift, wobei sich der Vorsprung und die Ausnehmung insbesondere in radialer Richtung erstrecken. Besonders bevorzugt weist die Spannfutterwandung im Bereich der Spannbohrung wenigstens einen radialen Vorsprung auf, der in wenigstens eine radiale Ausnehmung des Druckstücks eingreift. Die radiale Ausnehmung des Druckstücks ist dabei vorzugsweise als Längsnut ausgebildet, sodass eine Verlagerung des Druckstücks in Richtung der Längsachse der Spannschraube auch bei in die Ausnehmung eingreifendem Vorsprung erfolgen kann.

Besonders bevorzugt weist die Drehsicherung mindestens eine Wurm- oder Madenschraube auf, die sich durch die Spannfutterwandung, insbesondere quer, vorzugsweise senkrecht zur Längsachse der Spannbohrung, und vorzugsweise quer, vorzugsweise senkrecht zur Mittelachse, durch die Spannfutterwandung in die Spannbohrung erstreckt. Die wenigstens eine Wurm- oder Madenschraube greift in wenigstens eine am äußeren Umfang des Druckstücks angeordnete, entlang der Längsachse der Spannbohrung und der Spannschraube verlaufende, bevorzugt als Schlitz ausgebildete Ausnehmung in der äußeren Umfangsfläche des Druckstücks ein. Auf diese Weise kann das Druckstück sehr sicher und zugleich ohne übermäßig erhöhte Reibung gegen Verdrehung gesichert und in Richtung der Längsachse der Spannschraube verlagerbar gehalten werden.

Gemäß einer Weiterbildung der Erfindung ist vorgesehen, dass das Druckstück an seinem der Werkzeugaufnahme und damit der Mittelachse zugewandten Ende eine schräge Anlagefläche aufweist, die eingerichtet ist, um eine Flächenberührung mit einer korrespondierenden schrägen Schaftanlagefläche an einem zu spannenden Werkzeugschaft zu verwirklichen. Im Unterschied zu einer kreiszylindrischen Ausgestaltung der Spannschraube oder des Druckstücks mit endständiger Fase, die lediglich eine Linienberührung an einer entsprechenden schrägen Schaftanlagefläche ermöglicht, kann auf diese Weise eine vollflächige Anlage geschaffen werden, die auf den Werkzeugschaft in axialer Richtung, das heißt entlang der Mittelachse, wirkende Kräfte besser und - aufgrund der niedrigeren Flächenpressung - mit geringerer Gefahr für eine Beschädigung am Werkzeugschaft, der Spannschraube und/oder dem Druckstück aufnehmen kann. Der Werkzeugschaft kann gerade aufgrund dieser Flächenberührung besonders sicher und positionsgenau in der Werkzeugaufnahme gehalten sein, sodass die Prozesssicherheit weiter erhöht und die Genauigkeit von Arbeitsergebnissen unter Verwendung des Spannfutters verbessert ist. Die vollflächige Berührung ermöglicht dabei insbesondere eine spielfreie Anordnung und Einspannung des Werkzeugschafts in dem Spannfutter in axialer Richtung, was die Genauigkeit und Reproduzierbarkeit der Bearbeitung eines Werkstücks mit einem in das Spannfutter eingespannten Zerspanungswerkzeug erhöht.

Vorzugsweise weist die schräge Anlagefläche des Druckstücks einen Krümmungsradius auf, der größer ist als der Krümmungsradius der äußeren Umfangsfläche des Druckstücks außerhalb der schrägen Anlagefläche. Das Druckstück ist demnach im Bereich der schrägen Anlagefläche abgeflacht ausgebildet. Insbesondere dann, wenn ein entsprechend komplementär ausgestalteter Werkzeugschaft mit besonders bevorzugt komplementärer schräger Schaftanlagefläche verwendet wird, kann so eine vollflächige Anlage zwischen dem Druckstück und dem Werkzeugschaft gewährleistet werden.

Alternativ ist es möglich, dass die schräge Anlagefläche des Druckstücks als ebene Schrägfläche ausgebildet ist. Dies ermöglicht eine vollflächige Anlage insbesondere an einem Werkzeugschaft, der eine korrespondierende, ebene schräge Schaftanlagefläche aufweist.

Dass die Anlagefläche und die Schaftanlagefläche schräg sind, bedeutet insbesondere, dass diese Normalenvektoren aufweisen, die zumindest lokal einen Winkel mit der Mittelachse einschließen, der einerseits von 0° und andererseits von 90° verschieden ist.

Insbesondere dann, wenn das Druckstück eine schräge Anlagefläche aufweist, die einen größeren Krümmungsradius aufweist als eine äußere Umfangsfläche des Druckstücks außerhalb der schrägen Anlagefläche, oder die als ebene Schrägfläche ausgebildet ist, ist zugleich bevorzugt eine Drehsicherung vorgesehen, durch welche das Druckstück gegen eine Verdrehung um die Längsachse der Spannbohrung gesichert ist. Mithilfe der Drehsicherung des Spannfutters kann dann sichergestellt werden, dass die schräge Anlagefläche des Druckstücks stets in geeigneter Weise relativ zu dem Werkzeugschaft und insbesondere relativ zu der korrespondierenden schrägen Schaftanlagefläche ausgerichtet ist.

Die schräge Anlagefläche des Druckstücks ist insbesondere einer Einführöffnung der Werkzeugaufnahme, durch welche ein Werkzeugschaft in Richtung der Mittelachse gesehen in die Werkzeugaufnahme einführbar ist, abgewandt. Auf diese Weise können auf den Werkzeugschaft bei einer zerspanenden Bearbeitung wirkende Axialkräfte besonders gut abgestützt werden.

Gemäß einer Weiterbildung der Erfindung ist vorgesehen, dass das Spannfutter zwei Spannbohrungen aufweist, wobei jeder Spannbohrung der beiden Spannbohrungen jeweils eine Spannschraube zugeordnet ist. Diese Ausgestaltung ermöglicht insbesondere auch ein stabiles und sicheres Spannen größerer Werkzeugschäfte und/oder von Zerspanungswerkzeugen für zerspanende Anwendungen, insbesondere Fräsanwendungen, bei denen hohe Zerspanungskräfte auftreten, insbesondere für die Schruppbearbeitung.

Vorzugsweise sind die Spannbohrungen - und entsprechend die ihnen zugeordneten und bevorzugt in ihnen angeordneten Spannschrauben - in Richtung der Mittelachse gesehen versetzt zueinander angeordnet. Sie sind also insbesondere in Richtung der Mittelachse gesehen hintereinander angeordnet. Vorzugsweise sind dabei die Spannbohrungen und die Spannschrauben jeweils paarweise parallel zueinander ausgerichtet und - in Umfangsrichtung gesehen - auf gleicher Höhe, das heißt in gleicher Winkellage, angeordnet.

Alternativ oder zusätzlich ist bevorzugt vorgesehen, dass die Spannbohrungen identisch zueinander ausgebildet sind. Dies bedeutet insbesondere, dass sie bevorzugt gleiche lichte Innendurchmesser und ein gleiches Innengewinde aufweisen.

Alternativ oder zusätzlich sind bevorzugt die Spannschrauben identisch zueinander ausgebildet. Dies bedeutet insbesondere, dass sie bevorzugt gleiche Nenndurchmesser sowie gleiche erste und zweite Gewinde aufweisen.

Jeder der Spannschrauben ist außerdem ein Druckstück zugeordnet, wobei auch die Druckstücke bevorzugt gleich ausgebildet sind.

Insbesondere sind beide Spannbohrungen mit den entsprechenden Spannschrauben und Druckstücken bevorzugt so ausgebildet, wie dies zuvor für eine Spannbohrung mit einer Spannschraube und einem Druckstück erläutert wurde.

Gemäß einer Weiterbildung der Erfindung ist vorgesehen, dass die Werkzeugaufnahme einen Boden aufweist, an dem eine Federeinrichtung angeordnet ist, die eingerichtet ist, um ein in die Werkzeugaufnahme eingespanntes Werkzeug mit einer in Richtung der Einführöffnung der Werkzeugaufnahme gerichteten Vorspannkraft zu beaufschlagen. Der Boden und die Einführöffnung der Werkzeugaufnahme sind dabei einander entlang der Mittelachse gesehen gegenüberliegend angeordnet und begrenzen jeweils die Werkzeugaufnahme in Richtung der Mittelachse. Das einzuspannende Werkzeug kann mit dem Werkzeugschaft in Richtung der Mittelachse durch die Einführöffnung in die Werkzeugaufnahme eingeführt und bis zu dem Boden verlagert werden, wo die Federeinrichtung vorgespannt, insbesondere komprimiert wird, wobei das Werkzeug dann in vorgespanntem Zustand der Federeinrichtung mittels der Spannschraube und dem Druckstück gespannt wird. Die Federeinrichtung bewirkt so eine axiale Vorspannung des Werkzeugs entlang der Mittelachse in Richtung der Einführöffnung, sodass das Werkzeug insbesondere sicher und fest - in axialer Richtung - gegen das Druckstück gedrängt wird. Dies wiederum gewährleistet eine spielfreie, stabile und positionsgenaue Anordnung des Werkzeugs in der Werkzeugaufnahme, sodass die Prozesssicherheit erhöht und die Reproduzierbarkeit der Bearbeitungsergebnisse unter Verwendung des Spannfutters gewährleistet ist.

Gemäß einer Weiterbildung der Erfindung ist vorgesehen, dass die Spannfutterwandung wenigstens eine zur Werkzeugaufnahme hin randoffene Längsnut zur Kühl-/Schmiermittelführung aufweist. Die Längsnut erstreckt sich vorzugsweise parallel zu der Mittelachse, es ist aber auch möglich, dass sie schraubenlinienförmig oder in anderer geeigneter Weise verläuft. Ist ein Werkzeugschaft in die Werkzeugaufnahme eingesetzt, begrenzt einerseits die Spannfutterwandung im Bereich der randoffenen Längsnut und andererseits eine äußere Schaftumfangsfläche des Werkzeugschafts einen Kühl-/Schmiermittelkanal, der dann durch die randoffene Längsnut zusammen mit der äußeren Schaftumfangsfläche des Werkzeugschafts ausgebildet wird. Auf diese Weise kann Kühl-/Schmiermittel entlang des Werkzeugschafts axial in Richtung eines Bearbeitungsendes des Werkzeugs, insbesondere zu Werkzeugschneiden hin, transportiert werden. Der Werkzeugschaft ist dabei insbesondere von Kühlmittel umströmt. Es ist möglich, dass die Spannfutterwandung eine Mehrzahl solcher randoffenen Längsnuten aufweist. Besonders bevorzugt weist die Spannfutterwandung drei solcher randoffenen Längsnuten auf. Weist die Spannfutterwandung eine Mehrzahl randoffener Längsnuten auf, sind diese bevorzugt in gleichen Winkelabständen zueinander angeordnet, das heißt insbesondere symmetrisch - in Umfangsrichtung gesehen - verteilt. Insbesondere bei drei randoffenen Längsnuten sind diese somit bevorzugt um jeweils 120° zueinander versetzt entlang des Umfangs der Spannfutterwandung angeordnet.

In einer Ausgestaltung ist das Spannfutter als Flächenspannfutter ausgebildet. Bei dieser Ausgestaltung verwirklichen sich in besonderer Weise die bereits beschriebenen Vorteile.

Gemäß einer Weiterbildung der Erfindung ist vorgesehen, dass das Spannfutter zum Einspannen von Fräswerkzeugen eingerichtet ist. Hierbei verwirklichen sich in besonderer Weise die bereits beschriebenen Vorteile, insbesondere mit Blick auf eine stabile, dauerhafte und reproduzierbare, besonders bevorzugt spielfreie Einspannung, sodass auch hohe Zerspanungskräfte, beispielsweise bei der Schruppbearbeitung, aufgenommen werden können.

Besonders bevorzugt ist das Spannfutter eingerichtet, um Werkzeugschäfte zu spannen, die ausgebildet sind gemäß der deutschen Norm DIN 1835 in der an dem den Zeitrang der vorliegenden Anmeldung bestimmenden Tag gültigen Fassung, insbesondere für Werkzeugschäfte gemäß Form B (Zylinderschaft mit seitlicher Mitnahmefläche) und/oder Form E (Zylinderschaft mit geneigter Spannfläche). Gerade in diesen Fällen verwirklichen sich in besonderer Weise die bereits genannten Vorteile des Spannfutters.

Vorzugsweise weist das Spannfutter selbst einen - insbesondere in Richtung der Mittelachse gesehen der Werkzeugaufnahme abgewandten - Einspannabschnitt oder Werkzeugschaft auf, wobei der Einspannabschnitt oder Werkzeugschaft eingerichtet ist zum Einspannen des Spannfutters in ein Werkzeugteil oder eine Werkzeugmaschine, insbesondere in einen Adapter, in eine Verlängerung, oder in eine Maschinenspindel. Der Einspannabschnitt oder der Werkzeugschaft des Spannfutters ist bevorzugt als Hohlschaftkegel, als Morsekegel, oder in anderer geeigneter Weise ausgebildet.

Die Erfindung wird im Folgenden anhand der Zeichnung näher erläutert. Dabei zeigen
- Figur 1: eine schematische Längsschnittdarstellung eines Ausführungsbeispiels eines Spannfutters in einem ersten Funktionszustand;
- Figur 2: das Ausführungsbeispiel des Spannfutters gemäß Figur 1 in einem zweiten Funktionszustand;
- Figur 3: eine weitere Längsschnittansicht des Ausführungsbeispiels des Spannfutters gemäß den Figuren 1 und 2 mit relativ zu diesen Figuren versetzter und gedrehter Schnittebene, und
- Figur 4: eine Draufsicht auf das Ausführungsbeispiel des Spannfutters gemäß den Figuren 1 bis 3 mit Blickrichtung entlang der Mittelachse in eine Werkzeugaufnahme des Spannfutters.

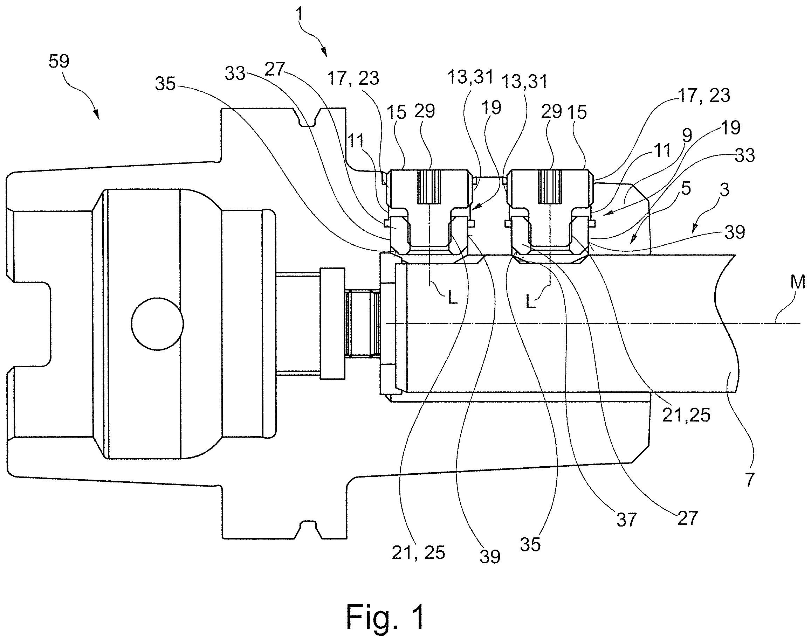

**Fig. 1** zeigt eine Darstellung eines Ausführungsbeispiels eines Spannfutters 1 zum Einspannen von Zerspanungswerkzeugen, hier insbesondere eines nur schematisch angedeuteten Fräswerkzeugs 3. Das Spannfutter 1 weist eine Mittelachse M und eine sich entlang der Mittelachse M erstreckende Werkzeugaufnahme 5 zum Aufnehmen eines einzuspannenden Werkzeugschafts 7 eines Zerspanungswerkzeugs, hier des Fräswerkzeugs 3, auf.

Das Spannfutter 1 weist außerdem eine die Werkzeugaufnahme 5 umgreifende Spannfutterwandung 9 auf, die quer zu der Mittelachse M von wenigstens einer Spannbohrung, hier von zwei Spannbohrungen 11, durchsetzt wird. Dabei weisen die Spannbohrungen 11 bevorzugt Längsachsen L auf, die sich quer, vorzugsweise senkrecht, zu der Mittlachse M erstrecken. Insbesondere erstrecken sich die Längsachsen L der Spannbohrungen 11 in radialer Richtung. Eine axiale Richtung weist dabei in Richtung der Mittelachse M beziehungsweise fällt mit dieser zusammen. Eine radiale Richtung steht senkrecht auf der Mittelachse M. Eine Umfangsrichtung umgreift die Mittelachse M konzentrisch.

Die Spannbohrungen 11 weisen jeweils zumindest abschnittsweise ein Innengewinde 13 auf.

In der wenigstens einen Spannbohrung 11, hier in jeder der Spannbohrungen 11, ist eine Spannschraube 15 angeordnet, wobei die Spannschrauben 15 jeweils ein erstes Gewinde 17 aufweisen, das mit dem Innengewinde 13 der jeweiligen Spannbohrung 11 kämmt.

Die Spannbohrungen 11 und die Spannschrauben 15 sind bevorzugt identisch ausgebildet, sodass der einfacheren Darstellung wegen im Folgenden nur noch auf jeweils eine der Spannschrauben 15 und der Spannbohrungen 11 eingegangen wird, wobei das für eine Spannbohrung 11 und eine Spannschraube 15 Ausgeführte entsprechend für alle Spannbohrungen 11 und Spannschrauben 15 gilt.

Die Spannschraube 15 weist ein Differenzgewinde 19 auf, welches seinerseits ein erstes Gewinde 17 und ein zweites Gewinde 21 aufweist. Das erste Gewinde 17 erstreckt sich über einen ersten Längsabschnitt 23 der Spannschraube 15, und das zweite Gewinde 21 erstreckt sich über einen zweiten Längsabschnitt 25 der Spannschraube 15. Das erste Gewinde 17 weist eine erste Gewindesteigung auf, und das zweite Gewinde 21 weist eine zweite Gewindesteigung auf, wobei die erste Gewindesteigung des ersten Gewindes 17 von der zweiten Gewindesteigung des zweiten Gewindes 21 verschieden ist.

Jede der Spannschrauben 15 wirkt über ihr jeweiliges zweites Gewinde 21 mit einem Druckstück 27 zusammen, das in der jeweiligen Spannbohrung 11 verlagerbar geführt ist. Auch die Druckstücke 27 sind bevorzugt identisch ausgebildet, sodass im Folgenden nur auf eines der Druckstücke 27 eingegangen wird, wobei das hierzu Ausgeführte auch für das andere oder die anderen Druckstücke 27 gilt.

Die Spannschraube 15 weist einen Betätigungseingriff 29 auf, über den ein Drehmoment in die Spannschraube 15 eingeleitet werden kann. Der Betätigungseingriff 29 ist bevorzugt als Mehrkanteingriff, insbesondere als Innensechskant-Eingriff, besonders bevorzugt als Inbus-Eingriff, ausgebildet. Insbesondere kann ein Werker oder Bediener des Spannfutters 1 mit einem Steckschlüssel in den Betätigungseingriff 29 eingreifen und die Spannschraube 15 lösen oder anziehen.

Dadurch, dass die Spannschraube 15 das Differenzgewinde 19 aufweist, kann bei gegebenem, in die Spannschraube 15 insbesondere über den Betätigungseingriff 29 eingeleiteten Drehmoment im Vergleich zu einer Spannschraube 15 mit konstanter Gewindesteigung eine größere axiale Spannkraft in Richtung der Längsachse L erhalten werden. Umgekehrt bedarf es zum Aufbauen einer vorgegebenen Spannkraft in Richtung der Längsachse L eines geringeren Drehmoments im Vergleich zu einer Spannschraube 15 mit konstanter Gewindesteigung. Das Differenzgewinde 19 - insbesondere in Zusammenwirken mit dem Druckstück 27 - wirkt quasi als eine Art Getriebe, welches das eingeleitete Drehmoment in eine verstärkte axiale Spannkraft umsetzt.

Das erste Gewinde 17 und das zweite Gewinde 21 weisen die gleiche Gangrichtung auf. Besonders bevorzugt sind das erste Gewinde 17 und das zweite Gewinde 21 als Rechtsgewinde ausgebildet.

Die erste Gewindesteigung des ersten Gewindes 17 ist größer als die zweite Gewindesteigung des zweiten Gewindes 21. Hierdurch ergibt sich insbesondere folgendes Verhalten der Spannschraube 15 und des Druckstücks 27:

In Figur 1 ist das Spannfutter 1 in einem ersten Funktionszustand, nämlich bei gelöstem Werkzeugschaft 7 dargestellt, wobei insbesondere die Druckstücke 27 nicht mit dem Werkzeugschaft 7 in Eingriff sind, sodass dieser frei in die Werkzeugaufnahme 5 hinein oder aus dieser heraus verlagert werden kann.

Wird die Spannschraube 15 gedreht, sodass sie in Richtung auf die Mittelachse M in die Spannbohrung 11 hineinverlagert wird, wird - aufgrund der gleichen Gangrichtung der Gewinde 17, 21 - das Druckstück 27 zugleich auf die Spannschraube 15 aufgeschraubt, mithin relativ zu der Spannschraube 15 entlang der Längsachse L in Richtung des ersten Gewindes 17 und des ersten Längsabschnitts 23 verlagert. Aufgrund der verschiedenen Gewindesteigungen der Gewinde 17, 21, wobei die erste Gewindesteigung größer ist als die zweite Gewindesteigung, ergibt sich jedoch im Ergebnis auch für das Druckstück 27 eine Verlagerung in Richtung der Längsachse L zu der Mittelachse M hin, mithin in Figur 1 nach unten. Allerdings verlagert sich das Druckstück 27 im Vergleich zu der Spannschraube 15 mit reduzierter Rate oder Verlagerungsgeschwindigkeit in Richtung auf die Mittelachse M, sodass für eine bestimmte Verlagerungsstrecke des Druckstücks 27 eine größere Anzahl von Umdrehungen der Spannschraube 15 nötig ist, als dies der Fall wäre, wenn die Schraube 15 mit gleicher Gewindesteigung - entsprechend der ersten Gewindesteigung - ohne Differenzgewinde in die Spannbohrung 11 eingeschraubt würde. Auf diese Weise ermöglich das Differenzgewinde 19 eine Verstärkung der in Richtung der Längsachse L in den Werkzeugschaft 7 eingeleiteten Spannkräfte bei gegebenem, in die Spannschraube 15 eingeleitetem Drehmoment.

Die erste Gewindesteigung ist vorzugsweise doppelt so groß wie die zweite Gewindesteigung. Besonders bevorzugt beträgt die erste Gewindesteigung 1 mm. Alternativ oder zusätzlich beträgt die zweite Gewindesteigung bevorzugt 0,5 mm.

Die Spannschraube 15 weist vorzugsweise in dem ersten Längsabschnitt 23 einen ersten Nenndurchmesser auf, der von einem zweiten Nenndurchmesser verschieden ist, den die Spannschraube 15 in dem zweiten Längsabschnitt 25 aufweist. Wie in Figur 1 dargestellt, ist bevorzugt der erste Nenndurchmesser größer als der zweite Nenndurchmesser.

Alternativ oder zusätzlich weist bevorzugt die Spannbohrung 11 einen entlang ihrer Länge, das heißt insbesondere in Richtung der Längsachse L gesehen, konstanten lichten Innendurchmesser auf.

Die Spannbohrung 11 weist das Innengewinde 13 bevorzugt in einem ersten Spannbohrungslängsabschnitt 31 auf, wobei der erste Längsabschnitt 23 der Spannschraube 15 in dem ersten Spannbohrungslängsabschnitt 31 der Spannbohrung 11 aufgenommen ist. Die Spannbohrung 11 ist außerdem bevorzugt in einem zweiten Spannbohrungslängsabschnitt 33 gewindefrei, weist dort also kein Innengewinde auf, wobei das Druckstück 27 in dem zweiten Spannbohrungslängsabschnitt 33 in Richtung der Längsachse L verlagerbar geführt ist.

Der erste Längsabschnitt 23 der Spannschraube 15 und der erste Spannbohrungslängsabschnitt 31 der Spannbohrung 11 sind bevorzugt der Mittelachse M abgewandt angeordnet, wobei der zweite Längsabschnitt 25 der Spannschraube 15 und der zweite Spannbohrungslängsabschnitt 33 der Spannbohrung 11 der Mittelachse M zugewandt sind. Insbesondere sind also der erste Längsabschnitt 23 und der erste Spannbohrungslängsabschnitt 31 in einem größeren radialen Abstand von der Mittelachse M gesehen angeordnet als der zweite Längsabschnitt 25 und der zweite Spannbohrungslängsabschnitt 33.

Das Ausführungsbeispiel des Spannfutters 1 gemäß Figur 1 weist - wie bereits ausgeführt - zwei Spannbohrungen 11 mit jeweils einer Spannschraube 15 auf. Dabei sind die Spannbohrungen 11 und damit zugleich auch die in den Spannbohrungen 11 angeordneten Spannschrauben 15 in Richtung der Mittelachse M gesehen versetzt zueinander angeordnet, insbesondere voneinander beabstandet. Zugleich sind sie - in Umfangsrichtung gesehen - in einer gleichen Winkelposition angeordnet.

Die Spannbohrungen 11 sind - wie ebenfalls bereits ausgeführt - identisch miteinander ausgebildet. Desgleichen sind die Spannschrauben 15 identisch miteinander ausgebildet.

Das Druckstück 27 weist an seinem der Werkzeugaufnahme 5 zugewandten, also zu der Mittelachse M hin ausgerichteten Ende eine schräge Anlagefläche 35 auf, die eingerichtet ist, um eine Flächenberührung mit einer korrespondierenden schrägen Schaftanlagefläche 37 an dem Werkzeugschaft 7 zu verwirklichen. Das Spannfutter 1 ist in Figur 1 in dem ersten, entspannten Funktionszustand dargestellt, sodass die Anlagefläche 35 nicht mit der Schaftanlagefläche 37 in Eingriff ist, insbesondere nicht an dieser anliegt.

Der Werkzeugschaft 7 weist hier nur eine Schaftanlagefläche 37 auf, welche dem in Figur 1 rechten Druckstück 27 zugeordnet ist. Für das in Figur 1 linke Druckstück 27 weist der Werkzeugschaft 7 keine solche Schaftanlagefläche auf. Es ist aber möglich, dass der Werkzeugschaft 7 so ausgebildet ist, dass er nur oder auch für dieses linke Druckstück 27 eine Schaftanlagefläche 37 aufweist.

Die schräge Anlagefläche 35 weist bevorzugt einen größeren Krümmungsradius auf als eine äußere Umfangsfläche 39 des Druckstücks 27 außerhalb der schrägen Anlagefläche 35. Besonders bevorzugt ist die schräge Anlagefläche 35 als ebene Schrägfläche ausgebildet.

Durch die flächige, vorzugsweise vollflächige Anlage der schrägen Anlagefläche 35 an der Schaftanlagefläche 37 kann in gespanntem Zustand eine Punkt- oder Linienberührung des Druckstücks 27 mit dem Werkzeugschaft 7 vermieden werden, sodass eine Flächenpressung reduziert und eine Beschädigung des Druckstücks 27 und/oder des Werkzeugschafts 7 verhindert wird.

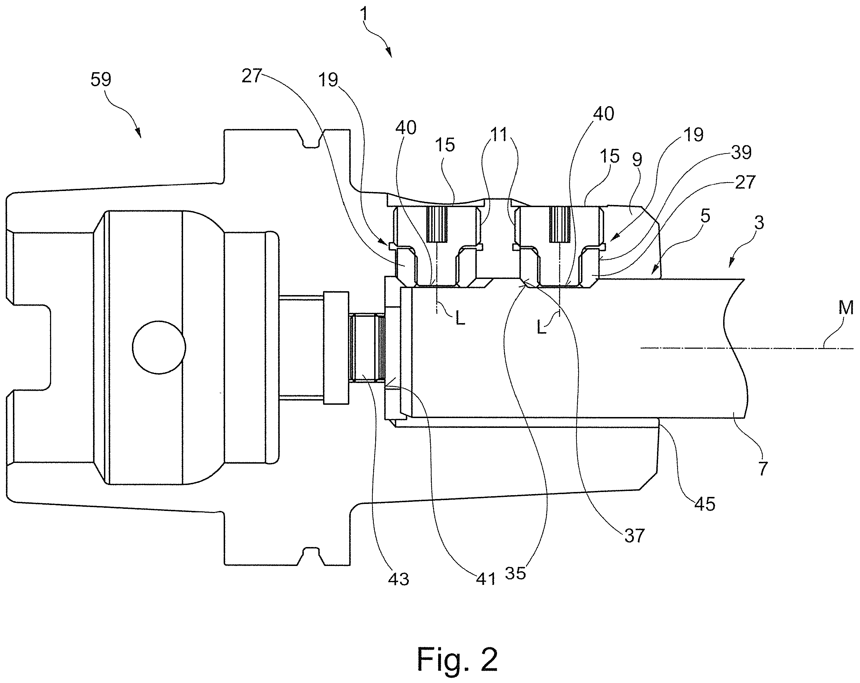

**Fig. 2** zeigt eine Darstellung des Ausführungsbeispiels des Spannfutters 1 gemäß Figur 1 in einem zweiten, gespannten Funktionszustand, in welchem der Werkzeugschaft 7 sicher und fest in die Werkzeugaufnahme 5 eingespannt ist. Gleiche und funktionsgleiche Elemente sind mit gleichen Bezugszeichen versehen, sodass insofern auf die vorangegangene Beschreibung verwiesen wird. Die Spannschrauben 15 sind hier - im Vergleich zu Figur 1 - weiter in die Spannbohrungen 11 eingedreht, sodass die Druckstücke 27 fest gegen wenigstens eine Spannfläche 40, hier zwei Spannflächen 40, des Werkzeugschafts 7 angepresst sind und diesen somit in der Werkzeugaufnahme 5 spannen. Dabei wird insbesondere die schräge Anlagefläche 35 gegen die Schaftanlagefläche 37 gedrängt, wodurch der Werkzeugschaft 7 sicher und stabil, insbesondere positionsgenau und reproduzierbar in der Werkzeugaufnahme 5 gehalten wird. Dies erhöht die Bearbeitungsgenauigkeit in vorteilhafter Weise.

Zu beachten ist, dass - wie zuvor bereits beschrieben - zugleich mit der Einwärtsbewegung der Spannschrauben 15 in Richtung auf die Mittelachse M gesehen eine Relativverlagerung der Druckstücke 27 auf die Spannschrauben 15 zu, insbesondere - im Bezugssystem der jeweiligen Spannschraube 15 gesehen - in Richtung der Längsachsen L auf die Betätigungseingriffe 29 zu, stattgefunden hat. Aufgrund der Ausgestaltung der Differenzgewinde 19 sind aber auch die Druckstücke 27 insgesamt in Richtung des Werkzeugschafts 7 verlagert worden, sodass sie diesen einspannen. Die Spannschrauben 15 haben dabei allerdings - in Richtung der Längsachsen L gesehen - ausgehend von ihrer Position in Figur 1 einen längeren Weg zurückgelegt als die Druckstücke 27. Insbesondere dann, wenn die erste Gewindesteigung doppelt so groß ist wie die zweite Gewindesteigung, entspricht der Verlagerungsweg der Spannschrauben 15 ausgehend von dem in Figur 1 dargestellten Zustand in den in Figur 2 dargestellten Zustand gerade der doppelten Strecke des Verlagerungswegs der Druckstücke 27. Auf diese Weise kommt der Effekt zustande, dass bei Einleitung eines bestimmten Drehmoments in die Spannschrauben 15 eine im Vergleich zu einer Spannschraube mit konstanter Gewindesteigung erhöhte axiale Spannkraft in den Werkzeugschaft 7 eingeleitet werden kann.

Die Werkzeugaufnahme 5 weist einen Boden 41 auf, an dem eine Federeinrichtung 43 angeordnet ist. Die Federeinrichtung 43 ist eingerichtet, um den Werkzeugschaft 7 mit einer in Richtung einer Einführöffnung 45 der Werkzeugaufnahme 5 gerichteten Vorspannkraft zu beaufschlagen. Durch die Vorspannkraft der Federeinrichtung 43 wird insbesondere die Schaftanlagefläche 37 sicher und fest gegen die schräge Anlagefläche 35 gedrängt, sodass der Werkzeugschaft 7 spielfrei in der Werkzeugaufnahme 5 gehalten wird.

Zum Spannen des Werkzeugschafts 7 in der Werkzeugaufnahme 5 kann dieser über die Einführöffnung 45, das heißt in den Figuren 1 und 2 von rechts, in die Werkzeugaufnahme 5 eingeführt werden, wobei der Werkzeugschaft 7 bevorzugt so weit in die Werkzeugaufnahme 5 eingeführt wird, dass die Federeinrichtung 43 vorgespannt wird. Dieses Einführen des Werkzeugschafts 7 erfolgt insbesondere in dem in Figur 1 dargestellten, entspannten Zustand. Sobald die Federeinrichtung 43 vorgespannt beziehungsweise komprimiert ist, werden die Spannschrauben 15 mit den Druckstücken 27 aus dem in Figur 1 dargestellten, entspannten Zustand in den in Figur 2 dargestellten Spannzustand gebracht, sodass schließlich der Werkzeugschaft 7 sicher, fest und insbesondere spielfrei in der Werkzeugaufnahme 5 eingespannt ist.

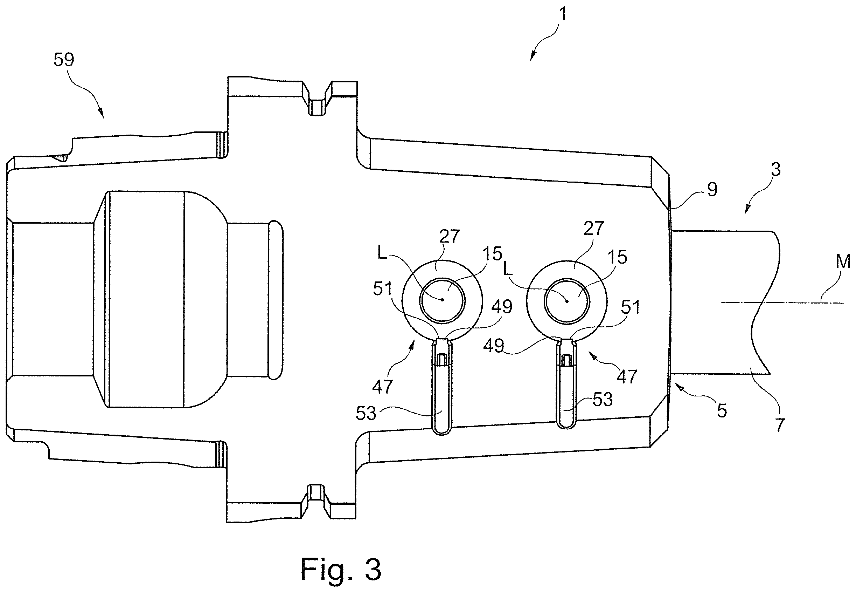

**Fig. 3** zeigt eine weitere Längsschnittdarstellung des Ausführungsbeispiels des Spannfutters 1 gemäß den Figuren 1 und 2, mit einer relativ zu der Schnittebene der Figuren 1 und 2 versetzt angeordneten und - insbesondere um 90° um die Mittelachse - gedrehten Schnittebene, die insbesondere außerhalb einer Mittelebene, also zur Mitte des Spannfutters 1 versetzt, angeordnet ist. Gleiche und funktionsgleiche Elemente sind mit gleichen Bezugszeichen versehen, sodass insofern auf die vorangegangene Beschreibung verwiesen wird. In Figur 3 ist dargestellt, dass das Spannfutter 1 bevorzugt eine Drehsicherung 47 aufweist, durch welche das Druckstück 27 gegen eine Verdrehung um die Längsachse L gesichert ist. Bei dem hier dargestellten Ausführungsbeispiel ist jedem Druckstück 27 eine Drehsicherung 47 zugeordnet. Die Drehsicherung 47 weist dabei allgemein einen Vorsprung 49 und eine Ausnehmung 51 auf, die ineinander greifen, um das Druckstück 27 gegen Verdrehung zu sichern. Der Vorsprung 49 ist hier insbesondere jeweils an einer Wurm- oder Madenschraube 53 angeordnet oder ausgebildet, welche die Spannfutterwandung 9 quer, insbesondere senkrecht zu der Mittelachse M durchsetzt. Die Ausnehmung 51 ist vorzugsweise als Schlitz in dem Druckstück 27 ausgebildet, insbesondere als das Druckstück 27 vollständig in Richtung der Längsachse L, die hier auf der Bildebene von Figur 3 senkrecht steht, durchgreifender Längsschlitz, sodass das Druckstück 27 entlang der Längsachse L verlagerbar ist, während der Vorsprung 49 mit der Ausnehmung 51 in Eingriff ist.

Anhand der Figuren 1 bis 3 zeigt sich auch, dass das Spannfutter 1 bevorzugt als Flächenspannfutter, insbesondere zum Einspannen von Fräswerkzeugen 3, ganz besonders zum Einspannen von Fräswerkzeugen 3 gemäß der deutschen Norm DIN 1835 in der an dem für den Zeitrang der vorliegenden Anmeldung bestimmenden Tag geltenden Fassung, insbesondere gemäß den Formen B und E, eingerichtet ist.

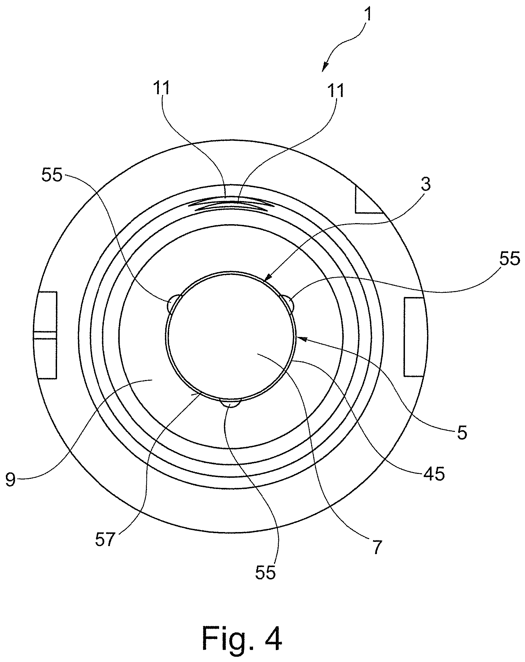

**Fig. 4** zeigt eine Darstellung des Ausführungsbeispiels des Spannfutters 1 gemäß den Figuren 1 bis 3 in Draufsicht auf die Einführöffnung 45. Gleiche und funktionsgleiche Elemente sind mit gleichen Bezugszeichen versehen, sodass insofern auf die vorangegangene Beschreibung verwiesen wird.

In der Draufsicht zeigt sich, dass die Spannfutterwandung 9 wenigstens eine zur Werkzeugaufnahme 5 hin randoffene, vorzugsweise im Querschnitt halbreisförmige Längsnut 55, hier drei solche Längsnuten 55, zur Kühl-/Schmiermittelführung aufweist. Ist der Werkzeugschaft 7 in die Werkzeugaufnahme 5 eingesetzt, sind diese Längsnuten 55 in radialer Richtung nach innen durch eine äußere Schaftumfangsfläche 57 geschlossen, sodass Kühl-/Schmiermittel außen an dem Werkzeugschaft 7 entlang zu einer Spitze des Fräswerkzeugs 3, insbesondere zu Schneiden desselben, geführt werden kann.

Anhand der Figuren 1 bis 3 zeigt sich im Übrigen noch, dass das Spannfutter 1 bevorzugt selbst einen Einspannabschnitt 59 aufweist, der insbesondere als Einspannschaft und hier bevorzugt als Hohlschaftkegel ausgebildet ist. Der Einspannabschnitt 59 dient insbesondere zum Einspannen des Spannfutters 1 in einen Adapter, eine Verlängerung, eine Maschinenspindel einer Werkzeugmaschine, oder dergleichen.

Mit dem hier vorgeschlagenen Spannfutter 1 ist eine besonders stabile, reproduzierbare und insbesondere spielfreie Spannung von Zerspanungswerkzeugen, insbesondere von Fräswerkzeugen 3, möglich.

## Patentansprüche

1. Spannfutter (1) zum Einspannen von Zerspanungswerkzeugen, mit
- einer sich entlang einer Mittelachse (M) des Spannfutters (1) erstreckenden Werkzeugaufnahme (5) zum Aufnehmen eines einzuspannenden Werkzeugschafts (7), und
- wenigstens einer eine die Werkzeugaufnahme (5) umgreifende Spannfutterwandung (9) quer zu der Mittelachse (M) durchsetzenden Spannbohrung (11), die zumindest abschnittsweise ein Innengewinde (13) aufweist, wobei
- in der wenigstens einen Spannbohrung (11) eine Spannschraube (15) angeordnet ist, die ein erstes Gewinde (17) aufweist, das mit dem Innengewinde (13) der Spannbohrung (11) kämmt, wobei
- die Spannschraube (15) ein Differenzgewinde (19) aufweist, wobei
- sich das erste Gewinde (17) über einen ersten Längsabschnitt (23) der Spannschraube (15) erstreckt, und wobei die Spannschraube (15) in einem zweiten Längsabschnitt (25) ein zweites Gewinde (21) mit von einer ersten Gewindesteigung des ersten Gewindes (17) verschiedener, zweiter Gewindesteigung aufweist, und wobei
- die Spannschraube (15) über das zweite Gewinde (21) mit einem Druckstück (27) zusammenwirkt, das in der Spannbohrung (11) verlagerbar geführt ist, wobei
- die erste Gewindesteigung größer ist als die zweite Gewindesteigung,
**dadurch gekennzeichnet, dass**
- das erste Gewinde (17) und das zweite Gewinde (21) eine gleiche Gangrichtung aufweisen.

2. Spannfutter (1) nach Anspruch 1, **dadurch gekennzeichnet, dass** die erste Gewindesteigung doppelt so groß ist wie die zweite Gewindesteigung, wobei besonders bevorzugt die erste Gewindesteigung 1 mm und/oder die zweite Gewindesteigung 0,5 mm beträgt/betragen.

3. Spannfutter (1) nach einem der vorhergehenden Ansprüche, **dadurch gekennzeichnet, dass**
a) die Spannschraube (15) in dem ersten Längsabschnitt (23) einen ersten Nenndurchmesser aufweist, der von einem zweiten Nenndurchmesser verschieden ist, den die Spannschraube (15) in dem zweiten Längsabschnitt (25) aufweist, wobei vorzugsweise der erste Nenndurchmesser größer ist als der zweite Nenndurchmesser, und/oder dass
b) die Spannbohrung (11) einen entlang ihrer Länge konstanten lichten Innendurchmesser aufweist, und/oder dass
c) die Spannbohrung (11) das Innengewinde (13) in einem ersten Spannbohrungslängsabschnitt (31) aufweist, in dem der erste Längsabschnitt (23) der Spannschraube (15) aufgenommen ist, wobei die Spannbohrung (11) in einem zweiten Spannbohrungslängsabschnitt (33) gewindefrei ist, wobei das Druckstück (27) in dem zweiten Spannbohrungslängsabschnitt (33) verlagerbar geführt ist.

4. Spannfutter (1) nach einem der vorhergehenden Ansprüche, **gekennzeichnet durch** eine Drehsicherung (47), durch welche das Druckstück (27) gegen eine Verdrehung um eine Längsachse (L) der Spannbohrung (11) gesichert ist.

5. Spannfutter (1) nach einem der vorhergehenden Ansprüche, **dadurch gekennzeichnet, dass** das Druckstück (27) an seinem der Werkzeugaufnahme (5) zugewandten Ende eine schräge Anlagefläche (35) aufweist, die eingerichtet ist, um eine Flächenberührung mit einer korrespondierenden schrägen Schaftanlagefläche (37) an einem zu spannenden Werkzeugschaft (7) zu verwirklichen, wobei die schräge Anlagefläche (35) vorzugsweise
a) einen größeren Krümmungsradius aufweist als eine äußere Umfangsfläche (39) des Druckstücks (27) außerhalb der schrägen Anlagefläche (35), oder
b) als ebene Schrägfläche ausgebildet ist.

6. Spannfutter (1) nach einem der vorhergehenden Ansprüche, **dadurch gekennzeichnet, dass** das Spannfutter (1) zwei Spannbohrungen (11) mit jeweils einer Spannschraube (15) aufweist, wobei die Spannbohrungen (11) und die Spannschrauben (15) vorzugsweise
a) in Richtung der Mittelachse (M) gesehen versetzt zueinander angeordnet, und/oder
b) paarweise identisch ausgebildet
sind.

7. Spannfutter (1) nach einem der vorhergehenden Ansprüche, **dadurch gekennzeichnet, dass** die Werkzeugaufnahme (5) einen Boden (41) aufweist, an dem eine Federeinrichtung (43) angeordnet ist, die eingerichtet ist, um ein in die Werkzeugaufnahme (5) eingespanntes Werkzeug mit einer in Richtung einer Einführöffnung (45) der Werkzeugaufnahme (5) gerichteten Vorspannkraft zu beaufschlagen.

8. Spannfutter (1) nach einem der vorhergehenden Ansprüche, **dadurch gekennzeichnet, dass** die Spannfutterwandung (9) wenigstens eine zur Werkzeugaufnahme (5) hin randoffene Längsnut (55) zur Kühl-/Schmiermittelführung aufweist.

9. Spannfutter (1) nach einem der vorhergehenden Ansprüche, **dadurch gekennzeichnet, dass** das Spannfutter (1) zum Einspannen von Fräswerkzeugen (3) eingerichtet ist.

## Claims

1. Chuck (1) for clamping machining tools, comprising
- a tool receptacle (5) extending along a central axis (M) of the chuck (1) for receiving a tool shaft (7) to be clamped, and
- at least one clamping bore (11) passing transversely to the central axis (M) through a chuck wall (9) surrounding the tool receptacle (5), which clamping bore (11) has an internal thread (13) at least in some sections, wherein
- a clamping screw (15) is arranged in the at least one clamping bore (11), which clamping screw has a first thread (17) that meshes with the internal thread (13) of the clamping bore (11), wherein
- the clamping screw (15) has a differential thread (19), wherein
- the first thread (17) extends over a first longitudinal section (23) of the clamping screw (15), and wherein the clamping screw (15) has, in a second longitudinal section (25), a second thread (21) with a second thread pitch that differs from a first thread pitch of the first thread (17), and wherein
- the clamping screw (15) interacts via the second thread (21) with a pressure piece (27) which is guided in a displaceable manner within the clamping bore (11), wherein
- the first thread pitch is greater than the second thread pitch,
**characterised in that**
- the first thread (17) and the second thread (21) have the same hand of thread.

2. Chuck (1) according to claim 1, **characterised in that** the first thread pitch is twice as large as the second thread pitch, wherein, in particularly preferably, the first thread pitch is 1 mm and/or the second thread pitch is 0.5 mm.

3. Chuck (1) according to any of the preceding claims, **characterised in that**
a) the clamping screw (15) has a first nominal diameter in the first longitudinal section (23) which differs from a second nominal diameter which the clamping screw (15) has in the second longitudinal section (25), wherein, preferably, the first nominal diameter is greater than the second nominal diameter, and/or that
b) the clamping bore (11) has an internal diameter that is constant along its length, and/or that
c) the clamping bore (11) comprises the internal thread (13) in a first longitudinal section (31) of the clamping bore, in which the first longitudinal section (23) of the clamping screw (15) is accommodated, wherein the clamping bore (11) is threadless in a second longitudinal section (33) of the clamping bore, wherein the pressure piece (27) is guided in a displaceable manner in the second longitudinal section (33) of the clamping bore.

4. Chuck (1) according to any of the preceding claims, **characterised by** an anti-rotation device (47) by means of which the pressure piece (27) is secured against rotation about a longitudinal axis (L) of the clamping bore (11).

5. Chuck (1) according to any of the preceding claims, **characterised in that** the pressure piece (27) has, at its end facing the tool receptacle (5), an inclined contact surface (35) which is configured to establish surface contact with a corresponding inclined shaft contact surface (37) on a tool shaft (7) to be clamped, wherein the inclined contact surface (35) preferably
a) has a larger radius of curvature than an outer circumferential surface (39) of the pressure piece (27) outside the inclined contact surface (35), or
b) is formed as a flat beveled surface.

6. Chuck (1) according to any of the preceding claims, **characterised in that** the chuck (1) comprises two clamping bores (11), each with a clamping screw (15), wherein the clamping bores (11) and the clamping screws (15) are preferably
a) arranged offset from one another as viewed in the direction of the central axis (M), and/or
b) configured identically in pairs.

7. Chuck (1) according to any of the preceding claims, **characterised in that** the tool receptacle (5) comprises a base (41) on which a spring device (43) is arranged, which is configured to apply a pre-load force to a tool clamped in the tool receptacle (5), directed towards an insertion opening (45) of the tool receptacle (5).

8. Chuck (1) according to any of the preceding claims, **characterised in that** the chuck wall (9) comprises at least one longitudinal groove (55) open at the edge facing the tool receptacle (5) for the cooling/lubricant conveyance.

9. Chuck (1) according to any of the preceding claims, **characterised in that** the chuck (1) is configured to clamp milling tools (3).

## Revendications

1. Mandrin de serrage (1) pour le serrage d'outils d'usinage, avec
- un porte-outil (5) s'étendant le long d'un axe médian (M) du mandrin de serrage (1) pour la réception d'une tige d'outil (7) à serrer, et
- au moins un alésage de serrage (11) traversant, perpendiculairement à l'axe médian (M), une paroi de mandrin de serrage (9) enserrant le porte-outil (5), lequel alésage de serrage comprend au moins par sections un filetage interne (13), dans lequel
- une vis de serrage (15) est disposée dans l'au moins un alésage de serrage (11), laquelle comprend un premier filetage (17) qui s'engrène avec le filetage interne (13) de l'alésage de serrage (11), dans lequel
- la vis de serrage (15) comprend un filetage différentiel (19), dans lequel
- le premier filetage (17) s'étend sur une première section longitudinale (23) de la vis de serrage (15), et dans lequel la vis de serrage (15) comprend dans une deuxième section longitudinale (25) un deuxième filetage (21) avec un deuxième pas de filetage différent d'un premier pas de filetage du premier filetage (17), et dans lequel
- la vis de serrage (15) coopère par l'intermédiaire du deuxième filetage (21) avec une pièce de pression (27), laquelle est guidée de manière déplaçable dans l'alésage de serrage (11), dans lequel
- le premier pas de filetage est plus grand que le deuxième pas de filetage,
**caractérisé en ce que**
- le premier filetage (17) et le deuxième filetage (21) sont de même sens.

2. Mandrin de serrage (1) selon la revendication 1, **caractérisé en ce que** le premier pas de filetage est deux fois plus grand que le deuxième pas de filetage, dans lequel de manière particulièrement préférée le premier pas de filetage s'élève à 1 mm et/ou le deuxième pas de filetage s'élève à 0,5 mm.

3. Mandrin de serrage (1) selon l'une des revendications précédentes, **caractérisé en ce que**
a) la vis de serrage (15) présente dans la première section longitudinale (23) un premier diamètre nominal qui est différent d'un deuxième diamètre nominal que présente la vis de serrage (15) dans la deuxième section longitudinale (25), dans lequel de préférence le premier diamètre nominal est plus grand que le deuxième diamètre nominal, et/ou **en ce que**
b) l'alésage de serrage (11) présente un diamètre interne libre constant le long de sa longueur, et/ou **en ce que**
c) l'alésage de serrage (11) comprend le filetage interne (13) dans une première section longitudinale d'alésage de serrage (31) dans laquelle est reçue la première section longitudinale (23) de la vis de serrage (15), dans lequel l'alésage de serrage (11) est dépourvu de filetage dans une deuxième section longitudinale d'alésage de serrage (33), dans lequel la pièce de pression (27) est guidée de manière déplaçable dans la deuxième section longitudinale d'alésage de serrage (33).

4. Mandrin de serrage (1) selon l'une des revendications précédentes, **caractérisé par** une sécurité anti-rotation (47) par le biais de laquelle la pièce de pression (27) est sécurisée contre une rotation autour d'un axe longitudinal (L) de l'alésage de serrage (11).

5. Mandrin de serrage (1) selon l'une des revendications précédentes, **caractérisé en ce que** la pièce de pression (27) comprend à son extrémité tournée vers le porte-outil (5) une surface d'appui inclinée (35), laquelle est conçue pour réaliser un contact de surface avec une surface d'appui de tige inclinée (37) correspondante au niveau d'une tige d'outil (7) à serrer, dans lequel la surface d'appui inclinée (35), de préférence,
a) présente un rayon de courbure plus grand que celui d'une surface périphérique externe (39) de la pièce de pression (27) en dehors de la surface d'appui inclinée (35), ou
b) est conçue sous la forme d'un biseau plan.

6. Mandrin de serrage (1) selon l'une des revendications précédentes, **caractérisé en ce que** le mandrin de serrage (1) comprend deux alésages de serrage (11) avec respectivement une vis de serrage (15), dans lequel les alésages de serrage (11) et les vis de serrage (15) sont de préférence
a) disposés de manière décalée les uns par rapport aux autres, vus dans la direction de l'axe médian (M), et/ou
b) conçus de manière identique par paires.

7. Mandrin de serrage (1) selon l'une des revendications précédentes, **caractérisé en ce que** le porte-outil (5) comprend un fond (41) au niveau duquel est disposé un dispositif à ressort (43), lequel est conçu pour soumettre un outil serré dans le porte-outil (5) à une force de précontrainte orientée en direction d'une ouverture d'introduction (45) du porte-outil (5).

8. Mandrin de serrage (1) selon l'une des revendications précédentes, **caractérisé en ce que** la paroi de mandrin de serrage (9) comprend au moins une rainure longitudinale (55) ouverte sur le bord vers le porte-outil (5) pour le guidage de réfrigérant/lubrifiant.

9. Mandrin de serrage (1) selon l'une des revendications précédentes, **caractérisé en ce que** le mandrin de serrage (1) est conçu pour le serrage de fraises (3).
